# EUROPÄISCHE PATENTSCHRIFT

(11) **EP 3 978 397 B1**
(45) Veröffentlichungstag und Bekanntmachung des Hinweises auf die Patenterteilung: **17.04.2024**
(21) Anmeldenummer: 21185506.9
(22) Anmeldetag: 14.07.2021
(51) Int. Cl.: B65G 7/04, B62B 3/10, B62B 3/02, B62B 3/18

(54) **VORRICHTUNG ZUM TRAGEN MINDESTENS EINES PLATTENFÖRMIGEN OBJEKTES**
DEVICE FOR HOLDING AT LEAST ONE DISC-SHAPED OBJECT
DISPOSITIF DE PORT D'AU MOINS UN OBJET EN FORME DE PLAQUE

(30) Priorität: 02.10.2020 DE 102020125888; 18.02.2021 DE 202021100811 U
(43) Veröffentlichungstag der Anmeldung: 06.04.2022
(73) Patentinhaber: Stairway2 UG (haftungsbeschränkt), 68753 Waghäusel (DE)
(72) Erfinder: Wójcik, Tomasz, 68753 Waghäusel (DE); Blase, Heinrich, 68723 Schwetzingen (DE)
(74) Vertreter: Riegel, Werner

(56) Entgegenhaltungen:
- CA-A1- 2 582 080
- DE-A1- 4 444 413
- JP-A- 2009 161 044
- US-A- D 729 043
- US-A- 4 166 638

## Beschreibung

Die Erfindung betrifft eine Vorrichtung zum Tragen mindestens eines plattenförmigen Objektes, wie beispielsweise einer Tür oder einem Fenster mit mehreren Verbindungselementen.

Es sind Tragsysteme für Türen bekannt, die aus mehreren Teilen zusammengebaut werden können. In der Regel sind solche Tragsysteme derart konstruiert, dass zum Beispiel Schienen mittels Befestigungsmittel miteinander verbindbar sind und so ein schienen- oder rinnenförmiges Tragsystem bildbar ist, an denen Türen befestigbar sind.

Aus der EP 2 145 298 B1 ist eine Einrichtung zum Transport von Gegenständen zu Verteilpunkten bekannt, die in den Laderaum eines Fahrzeuges eingebracht wird. Diese Einrichtung umfasst ein fahrbares Regalmodul, welches mehrere Ebenen zur Aufnahme von Gegenständen aufweist, wobei das Regalmodul mit Rädern ausgebildet ist und so in den Laderaum des Fahrzeuges eingeschoben wird.

US 4 166 638 A beschreibt eine Vorrichtung gemäß dem Oberbegriff des Anspruchs 1 mit einer mit Rädern versehenen Plattform mit verstellbarer Länge, die mit Gurten zur Befestigung einer Last an der Plattform ausgestattet ist, mit vorstehenden Griffen, die an einer Endwand der Plattform angebracht sind, und mit Schulterpolstern, die unter der Plattform vorliegen. Die Plattform wird durch Metallschienen gebildet, die eine Längsnut aufweisen und entlang ihrer Längsachse zumindest teilweise übereinander greifend angeordnet sind, so dass die Nuten koaxial liegen.

Nachteilig bei den bekannten Systemen ist, dass die Türen liegend aufgenommen werden und für den Transport viel Platz oder Stauraum benötigt wird. Andererseits können die Türen auch stehend transportiert werden, indem sie an einem Regal oder einem Haltesystem in einem Fahrzeug befestigt werden. Für den Weitertransport außerhalb des Fahrzeuges muss dann diese Verbindung gelöst und ein weiteres Transportmittel gefunden werden.

Der Erfindung liegt die Aufgabe zugrunde, ein einfaches und flexibles Transportmittel für plattenförmige Objekte bereitzustellen, das auch in z. B. einen Laderaum eines Fahrzeuges einbringbar ist.

Die Aufgabe wird erfindungsgemäß durch die Vorrichtung gemäß Anspruch 1 gelöst, wobei eine Vorrichtung zum Tragen mindestens eines plattenförmigen Objektes mit mehreren Verbindungselementen bereitgestellt wird, wobei die Verbindungselemente mindestens ein Langloch zur Durchführung mindestens eines Befestigungsmittels aufweisen und die Verbindungselemente derart zueinander anordbar sind, dass ein Befestigungsmittel durch mindestens zwei Langlöcher zweier Verbindungselemente ragt, so dass eine aufrechte oder senkrecht zum Boden stehende Rahmenkonstruktion gebildet ist, an die wenigstens das Objekt anlehnbar ist, wobei an einer Unterseite der Rahmenkonstruktion Rollen zum Bewegen der Vorrichtung angebracht sind, wobei die Verbindungselemente eine rechteckige Form mit mindestens zwei hintereinander im Wesentlichen mittig vorliegenden separaten Langlöchern aufweisen.

Im Sinne der Erfindung können verschiedenartige plattenförmige Objekte mit der erfindungsgemäßen Vorrichtung in einfacher Weise transportiert werden. Derartige Objekte umfassen beispielsweise, aber nicht abschließend Tür, Fenster, Tischplatte, Küchenarbeitsplatte, Holzplatte, Metallplatte, Kunststoffplatte, Fliesen, flächige Kunstwerke wie beispielsweise Bilder oder dergleichen.

In einer bevorzugten Ausgestaltung ist die Rahmenkonstruktion aufrecht oder senkrecht zum Boden ausgebildet, so dass ein Objekt im Wesentlichen aufrecht, insbesondere auf einer der Schmalseiten liegend transportierbar ist.

Die erfindungsgemäße Ausgestaltung ermöglicht jedoch, dass das Objekt auch waagerecht, insbesondere auf der Längsseite liegend transportierbar ist. Des Weiteren kann es vorteilhaft sein, wenn das zu transportierende Objekt liegend, das heißt auf einer seiner Flächen aufliegend von der Vorrichtung transportiert wird. Als Beispiel sei hier eine zu transportierende Tür genannt, die auf dem Türblatt aufliegt. Dies ist insbesondere dann von Vorteil, wenn mehrere flächige Elemente in einfacher Weise stapelbar sind und hierdurch einfach transportiert werden können.

Ein wesentlicher Vorteil der Erfindung ist, dass die Vorrichtung flexibel errichtet werden kann und in einfacher Weise an die Größe eines zu transportierenden Objektes anpassbar ist. Außerdem kann die Vorrichtung auch einfach in den Laderaum eines Fahrzeuges eingebracht und dort mitsamt dem Objekt angeordnet werden. Mehrere Vorrichtungen können hintereinander in dem Laderaum angeordnet, im Wesentlichen gestapelt werden, so dass der zur Verfügung stehenden Stauraum optimal genutzt ist. Die erfindungsgemäße Vorrichtung ist somit für den Laderaum und den Transport außerhalb des Fahrzeuges verwendbar.

Die Verbindungselemente werden im Sinne der Erfindung auch als Bauteile bezeichnet. Die Verbindungselemente können unterschiedliche Längen aufweisen, so dass sich verschieden große Rahmenkonstruktionen bilden lassen, indem je nach Bedarf unterschiedlich lange Verbindungselemente miteinander verbunden werden. Hierbei durchragt ein Befestigungsmittel, wie beispielsweise eine Schraube oder ein Bolzen zwei Verbindungselemente, die im Wesentlichen derart zueinander angeordnet sind, dass das Befestigungsmittel beide Langlöcher durchragen kann. Hierbei müssen die Langlöcher nicht deckungsgleich übereinanderliegen. Vielmehr ist eine bereichsweise Überlappung der Langlöcher ausreichend, so dass das Befestigungsmittel hindurchragen kann. Aufgrund der Langlöcher können die Verbindungselemente in unterschiedlichen Winkeln zueinander und versetzt zueinander befestigt werden.

Es kann jedoch auch bevorzugt sein, dass mindestens ein Langloch eines Verbindungselementes quer zur Längsachse des Verbindungselementes vorliegt.

Erfindungsgemäß weisen die Verbindungselemente eine rechteckige Form auf mit mindestens zwei hintereinander im Wesentlichen mittig vorliegenden separaten Langlöchern. Hierdurch ist ein Verbindungselement mit z. B. zwei separaten Verbindungselementen über die beiden Langlöcher verbindbar.

Es kann gemäß einer Ausführungsform, die nicht Teil der Erfindung ist vorgesehen sein, dass die Verbindungselemente zwei Arme umfassen, die in einem rechten Winkel zueinanderstehen, so dass die Längsachsen der Arme in einem Winkel von 90° zueinanderstehen, wobei die insbesondere flächig ausgebildeten Arme in einer Ebene liegen. Die beiden Arme der Verbindungselemente, die in einem rechten Winkel zueinanderstehen, weisen vorteilhafterweise jeweils mindestens ein Langloch auf, wobei die Längsachsen der Langlöcher in einem Winkel von 90° zueinanderstehen. Hierdurch ist je ein Arm mit einem anderen Verbindungselement verbindbar. Es kann jedoch auch vorteilhaft sein, wenn die Verbindungselemente aus zwei Armen bestehen, die in einem Winkel zueinanderstehen, der über oder unter 90° liegt, wobei die insbesondere flächig ausgebildeten Arme in einer Ebene liegen. Das heißt, die Längsachsen der Arme stehen insbesondere in einem Winkel zueinander, der über oder unter 90° liegt. Je nach Anwendung können die Arme in einem unter 90° oder in einem über 90° liegendem Winkel zueinander ausgerichtet sein, wobei vorteilhafterweise in jedem Arm mindestens ein Langloch vorliegt, über das die Arme mit weiteren Verbindungselementen verbindbar sind.

Die Verbindungselemente können in einer Ausgestaltung aus Metall bestehen. Metall weist für das Tragen und Führen einer Tür die notwendigen physikalischen Eigenschaften auf. Als Metall kann beispielsweise ein Stahl verwendet werden. Es können jedoch auch faserverstärkte Kunststoffe verwendet oder mit einem Metall kombiniert werden.

Bevorzugt ist es, wenn die Verbindungselemente eben ausgestaltet sind. Gerade bei Verbindungselementen mit zwei Armen kann es vorteilhaft sein, wenn die Arme gewinkelt zueinander ausgerichtet sind, sind, wobei diese Ausführungsform nicht Teil der Erfindung ist, so dass deren Längsachsen in voneinander verschiedenen Ebenen liegen. Hierbei kann es vorteilhaft sein, dass bei der geknickten Ausgestaltung zwei Flächen in einem Winkel von 90° zueinanderstehen. Es kann jedoch auch vorteilhaft sein, dass bei der geknickten Ausgestaltung welche nicht Teil der Erfindung ist, zwei Flächen in einem Winkel von mehr oder weniger als 90° zueinanderstehen. Die an der Rahmenkonstruktion vorliegenden Rollen können feststellbar oder arretierbar gestaltet sein. Dies ist insbesondere vorteilhaft, wenn eine Bewegung der Vorrichtung verhindert werden soll. Die Anzahl der Rollen an der Rahmenkonstruktion kann je nach Anwendung angepasst werden. Hierfür können die Rollen, sprich deren Rollkörper z. B. an der Unterseite der Rahmenkonstruktion angeschraubt werden, wobei auch Steckverbindungen möglich sind, mit denen die Rollen einfach in entsprechende Aufnahmen in der Rahmenkonstruktion einsteckbar sind.

Um die Stabilität der Rahmenkonstruktion und deren Bewegbarkeit zu verbessern, kann vorgesehen sein, dass die Rahmenkonstruktion von ihr im Wesentlichen senkrecht abstehende Halteelemente aufweist, an denen Rollen angeordnet sind. Die Halteelemente bestehen ebenfalls aus den Verbindungselementen und sind insbesondere im unteren Bereich der Rahmenkonstruktion angeordnet, so dass sie einen Fuß oder mehrere Füße bilden, die vorzugsweise an gegenüberliegenden Seiten der Rahmenkonstruktion senkrecht von ihr abstehen. Die Rahmenkonstruktion weist insbesondere eine Vorder- und eine Rückseite auf, wobei mindestens ein Halteelement pro Vorder- bzw. Rückseite angeordnet ist. Bei Bedarf können auch mehrere Halteelemente an der Rahmenkonstruktion angebracht sein. Die Halteelemente weisen vorzugsweise Rollen an ihren Unterseiten auf. Die Rollen können beispielsweise über Schraub- oder Steckverbindungen an den Halteelementen befestigt sein.

Des Weiteren kann es vorteilhaft sein, dass die Rahmenkonstruktion in ihrem unteren Bereich durch die Verbindungselemente gebildete Auflagen aufweist, auf die das zu transportierende Objekt auflegbar ist. Derartige Auflagen können von entsprechend ausgebildeten Verbindungselementen gebildet sein. Hierfür eignen sich insbesondere Verbindungselemente, die gewinkelt oder geknickt geformt sind. Es kann jedoch auch vorgesehen sein, dass eine sonstige Auflage an der Rahmenkonstruktion mittels Schraub- oder Steckverbindungen befestigt wird. Hierbei kann es sich beispielsweise um ein Metallgitter, ein Brett, eine Metallleiste oder um ein sonstiges flächiges Element handeln. Die Position der Auflage befindet sich vorteilhafterweise im unteren Bereich der Rahmenkonstruktion, kann aber aufgrund der reversiblen Verbindung zwischen Auflage und Rahmenkonstruktion variiert und an die Maße des zu transportierenden Objektes angepasst werden.

Es kann vorgesehen sein, dass die Rahmenkonstruktion eine Vorder- und eine Rückseite aufweist und jeweils ein Objekt an die Vorder- und Rückseite anlehnbar ist. Hierdurch können mehrere Objekte von einer Vorrichtung in einfacher Weise transportiert werden, ohne dass hierfür mehr Platz oder Stauraum benötigt wird. Selbstverständlich kann die Vorrichtung auch dazu benutzt werden, um z. B. mehrere verschiedenartige Objekte zu transportieren. Als Beispiel hierfür sei der Transport von plattenförmigen Objekten genannt, die dazu dienen, eine Küche zu bilden. Die Objekte können hierbei beispielsweise eine Tischplatte oder eine Arbeitsplatte darstellen, die gemeinsam mit einer Schrankwand mithilfe der Vorrichtung transportiert werden.

Um eine Beschädigung des Objektes bzw. der Rahmenkonstruktion zu vermeiden, kann vorgesehen sein, dass die Rahmenkonstruktion Abstandsmittel aufweist, mit denen der Abstand zwischen Rahmenkonstruktion und Objekt einstellbar ist. Hierbei kann es sich beispielsweise um Verbindungselemente handeln, die mittels Schraubverbindungen beabstandet zur Rahmenkonstruktion, insbesondere deren seitliche Pfosten angeordnet sind. Je nach Maße des zu transportierenden Objektes können derartige Abstandsmittel variabel angebracht und deren Position leicht verändert werden. Bevorzugt sind beispielsweise gewinkelte Verbindungselemente. Des Weiteren können als Abstandsmittel auch sonstige aus Metall oder Kunststoff hergestellte Bauteile benutzt werden, die an der Rahmenkonstruktion befestigt werden und an die sich ein zu transportierendes Objekt lehnen kann.

Um ein Kippen des zu transportierenden Objektes zu verhindern, kann vorgesehen sein, dass die Rahmenkonstruktion verstellbare Sicherungsmittel aufweist, die aus einer Beladestellung in eine Sicherungsstellung bringbar sind, in der eine Bewegung des aufgenommenen Objektes mindestens eingeschränkt ist. In der Beladestellung ist quasi die Rahmenkonstruktion zugänglich, das heißt, ein Objekt kann angelehnt werden, wogegen in der Sicherungsstellung dies nicht möglich ist. In der Sicherungsstellung lehnt sich das Objekt insbesondere an die Rahmenkonstruktion und ein Entfernen des Objektes ist durch die sich in der Sicherungsstellung befindlichen Sicherungsmittel nicht möglich. Die Sicherungsmittel können aus Haken, Riegel oder derartiges gebildet sein und so an der Rahmenkonstruktion befestigt werden, dass sie zum Beladen der Vorrichtung in eine Beladestellung verschwenkbar und nach dem Beladen in eine Sicherungsstellung bringbar sind, in der das zu transportierende Objekt nicht kippen kann. Als Sicherungsmittel können auch entsprechend ausgebildete Verbindungselemente genutzt werden.

Des Weiteren kann vorgesehen sein, dass die Rahmenkonstruktion Schutzelemente aufweist, die aus einem elastischen Material bestehen und an der Rahmenkonstruktion vorliegen, um eine Beschädigung des aufgenommenen Objektes und/oder der Rahmenkonstruktion zu verhindern. Hierbei kann es sich beispielsweise um Schaumstoff oder Gummielemente handeln die reversibel an der Rahmenkonstruktion und/oder des zu transportierenden Objektes befestigbar sind. Gerade bei dem Transport plattenförmiger Objekte wie beispielsweise einem Gemälde oder einem Kunstwerk ist es vorteilhaft, wenn dieses mit dem Schutzelemente oder mit Schutzelementen vor eine Beschädigung geschützt ist.

Ferner betrifft die Erfindung einen Bausatz gemäß Anspruch 10.

Die erfindungsgemäße Vorrichtung kann vorteilhafterweise als Bausatz transportiert werden, sodass ein einfacher Versand und Transport der Vorrichtung in Gestalt eines Bausatzes möglich ist. Der Bausatz kann bei Bedarf und vor Ort montiert bzw. demontiert werden.

Die Erfindung wird nachfolgend anhand von Ausführungsbeispielen der Erfindung näher erläutert, die in der Zeichnung dargestellt sind. Es zeigen
- Figur 1: perspektivische Ansicht einer Ausgestaltung eines gewinkelten Verbindungselements,
- Figur 2: perspektivische Ansicht einer weiteren Ausgestaltung eines gewinkelten Verbindungselements,
- Figur 3: perspektivische Ansicht einer weiteren Ausgestaltung eines gewinkelten Verbindungselements,
- Figur 4: perspektivische Ansicht einer weiteren Ausgestaltung eines gewinkelten Verbindungselements mit Wandelement,
- Figur 5: perspektivische Ansicht einer weiteren Ausgestaltung eines gewinkelten Verbindungselements,
- Figur 6: perspektivische Ansicht einer weiteren Ausgestaltung eines gewinkelten Verbindungselements,
- Figur 7: perspektivische Ansicht einer weiteren Ausgestaltung eines gewinkelten Verbindungselements,
- Figur 8: perspektivische Ansicht einer Ausgestaltung eines geknickten Verbindungselements,
- Figur 9: perspektivische Ansicht einer weiteren Ausgestaltung eines gewinkelten Verbindungselements mit vier Langlöchern,
- Figur 10: perspektivische Ansicht einer weiteren Ausgestaltung eines gewinkelten Verbindungselements mit vier Langlöchern,
- Figur 11: eine Draufsicht einer Ausgestaltung eines Verbindungsteils mit zwei Langlöchern,
- Figur 12: eine perspektivische Ansicht einer weiteren Ausgestaltung eines gewinkelten Verbindungselements mit zwei Langlöchern
- Figuren 13-32: weitere perspektivische Ansichten weiterer Verbindungselemente und
- Figuren 33-38: beispielhafte Ausgestaltungen der erfindungsgemäßen Vorrichtung.

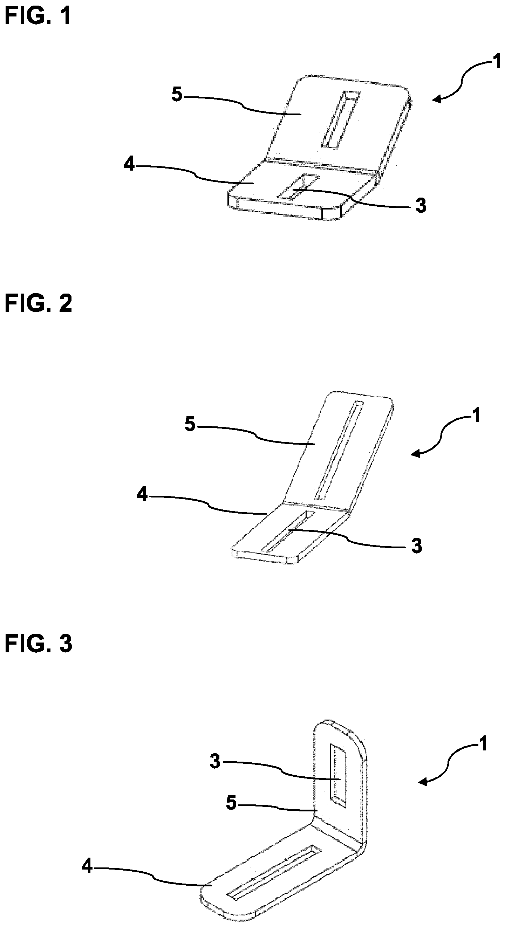

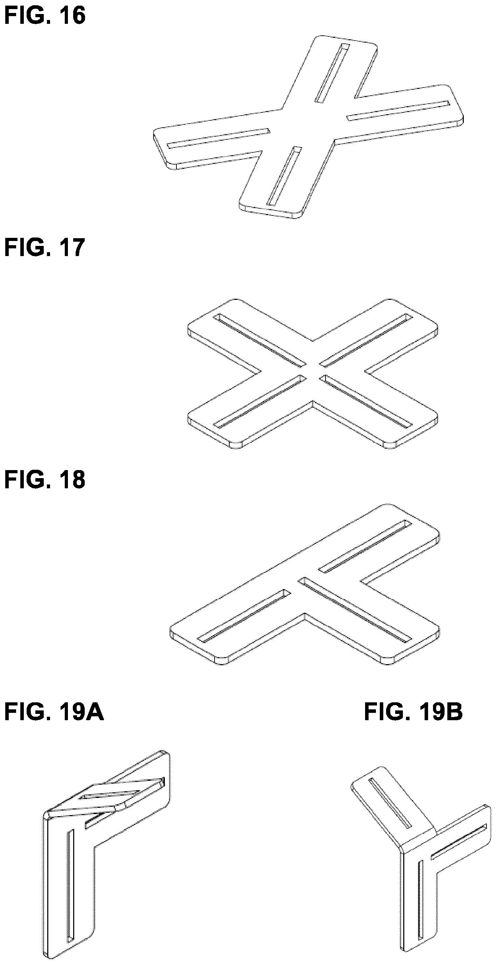

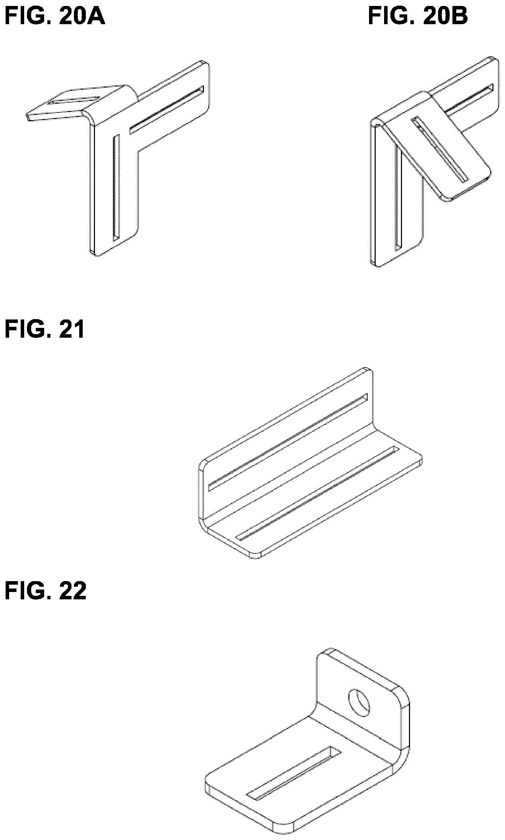

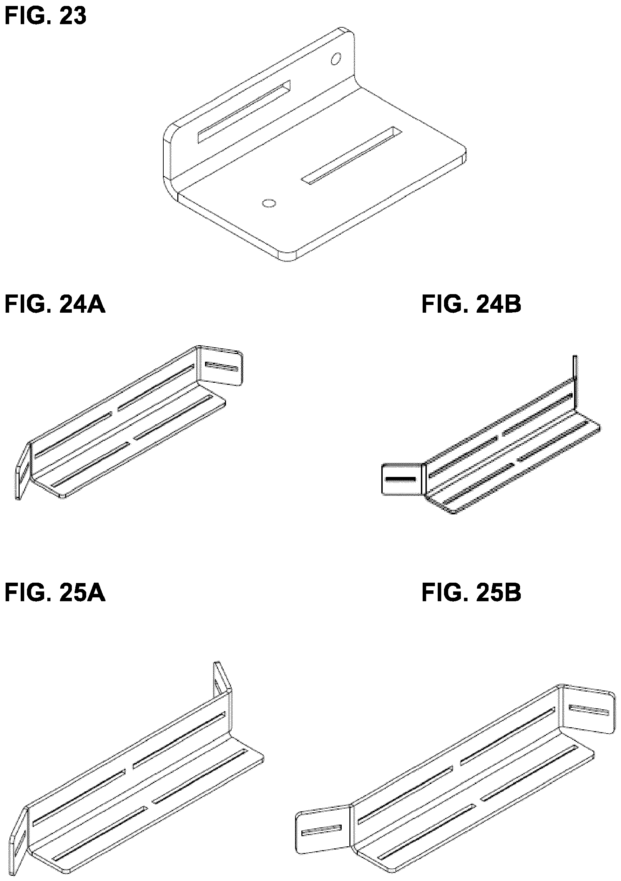

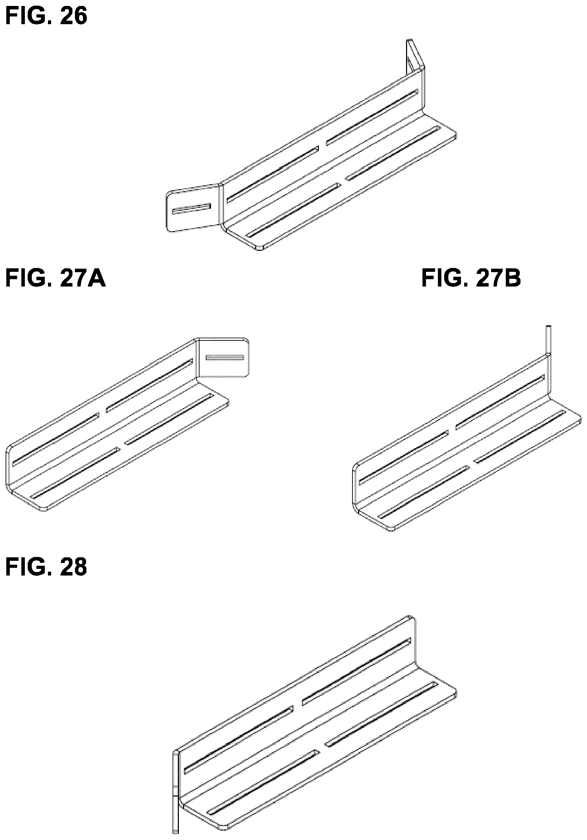

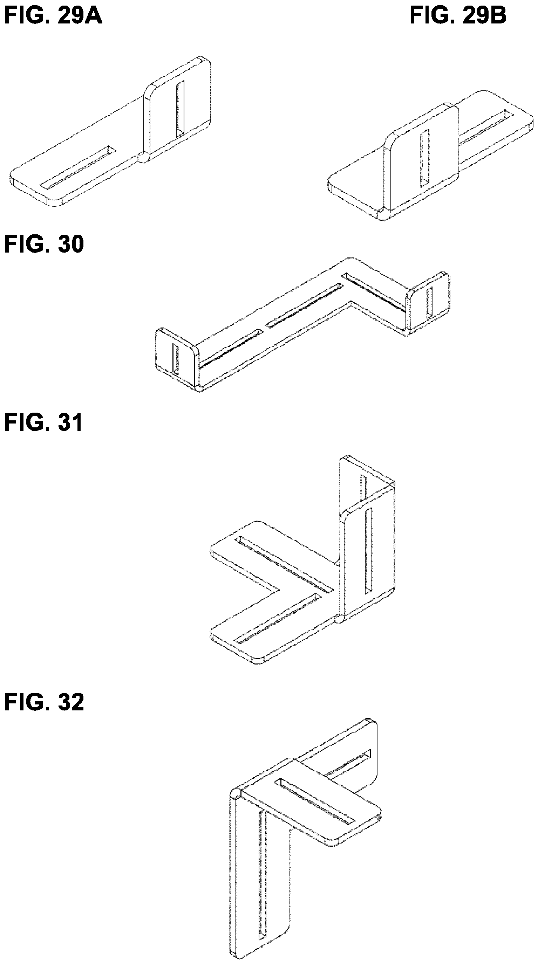

Die Ausführungsformen gemäß den Figuren 1-10, 12, 14, 16-32 sind nicht Teil der Erfindung.

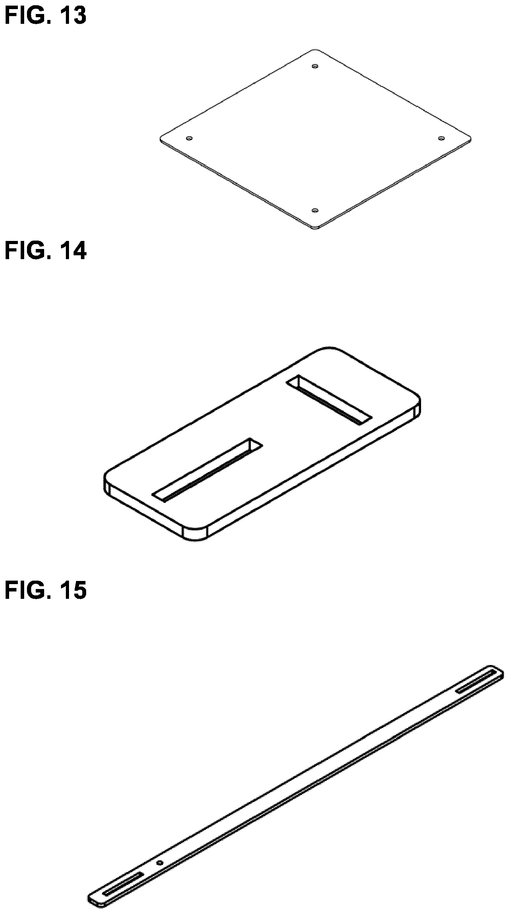

In den Figuren 1 bis 12 sind bevorzugte Ausgestaltungen von Verbindungselementen dargestellt. Erfindungsgemäße Vorrichtung umfasst mehrere Verbindungselemente 1, die über in Figur 13 gezeigte Befestigungsmittel 2 miteinander verbunden sind. Die Verbindungselemente 1 sind vorzugsweise als länglich gestaltete flache Rechtecke ausgeführt. Die Verbindungselemente 1 können jedoch vollständig oder bereichsweise auch andere geometrische Formen aufweisen. So kann beispielsweise ein Ende eines Verbindungselementes 1 spitzzulaufend oder abgerundet gestaltet sein. Die Höhe der Verbindungselemente 1 kann beispielsweise im Bereich von 0,5 cm bis 5 cm liegen oder mehr oder weniger. Die Höhe und/oder auch Breite der Verbindungselemente 1 kann über ihre Länge variieren, das heißt, die Höhe und/oder Breite kann über die Länge abnehmen oder zunehmen.

Jedes Verbindungselement 1 umfasst mindestens ein Langloch 3, das zumindest bereichsweise entlang der Längsachse der Verbindungselemente 1 verläuft. Die Länge des Langlochs 3 kann zwischen den Verbindungselementen 1 variieren, so dass die Langlöcher 3 der Verbindungselemente 1 unterschiedliche Längen und/oder Breiten aufweisen können. Das Langloch 3 kann entgratete Enden umfassen, so dass das Langloch 3 keine Ecken aufweist. Enden mit Ecken können jedoch auch vorteilhaft sein.

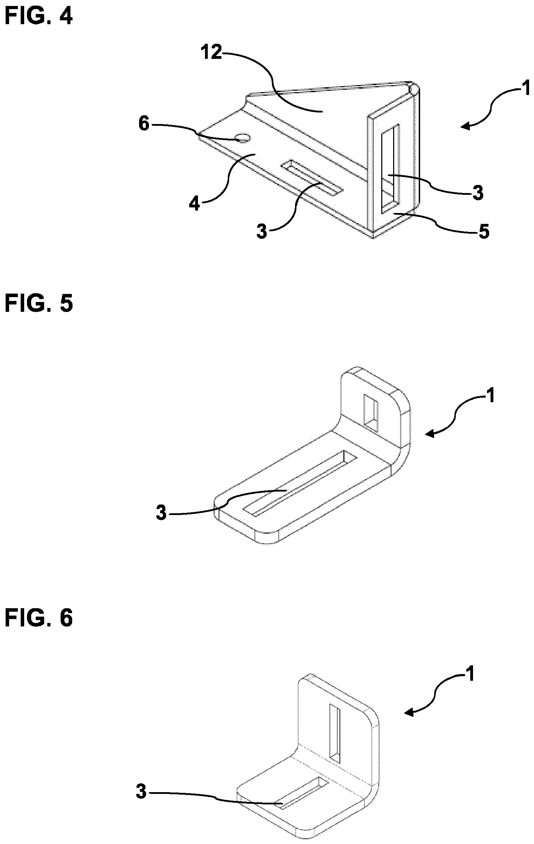

Die Verbindungselemente 1 können zwei- oder mehrarmig ausgestaltet sein, wobei in jedem Arm 4, 5 wenigstens ein Langloch 3 angeordnet sein kann. Die Arme 4, 5 können derart zueinander angeordnet sein, dass sie in einem Winkel von 90° oder mehr oder weniger als 90° zueinanderstehen. Hierbei liegen die Längsachsen der Arme 4, 5 vorzugsweise in einer senkrecht zur Fläche der Verbindungselemente 1 verlaufenden Ebene. Die Langlöcher 3 der Arme 4, 5 verlaufen entlang der Längsachsen der Arme 4, 5. Die Länge und Breite der Langlöcher 3 der Arme 4, 5 eines Verbindungselementes1 kann unterschiedlich sein, wie beispielsweise in den Figuren 3 und 5 zu erkennen ist. Bei dieser Ausgestaltung sind die Arme 4, 5 über die Schmalseite eines Verbindungselementes 1 verbunden.

In Figur 4 ist eine Ausgestaltung eines Verbindungselements 1 gezeigt, bei dem zwischen den Armen 4, 5 ein Wandelement 12 integriert ist.

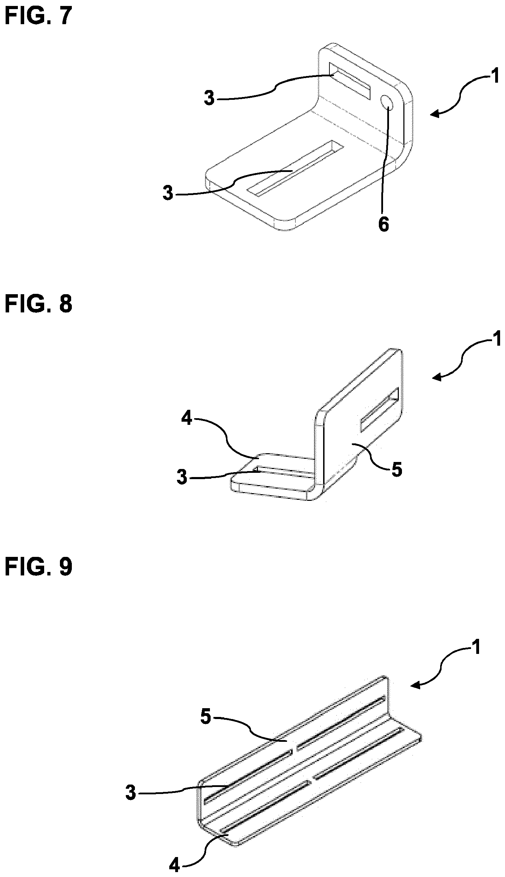

In einer weiteren Ausgestaltung, die in den Figuren 7 und 8 beispielhaft dargestellt ist, sind die Langlöcher 3 der Arme 4, 5 nicht in einer Ebene angeordnet, sondern ein Langloch 3 eines Arms 4, 5 ist im Wesentlichen quer zum Langloch 3 des anderen Arms 4, 5 angeordnet. Je nach Ausgestaltung kann somit, wie gut in Figur 8 erkennbar, ein erster Arm 4 des Verbindungselementes 1 länger vorgesehen sein, wie der zweite Arm 5. Der zweite Arm 5 ist zum ersten Arm 4 geknickt angeordnet.

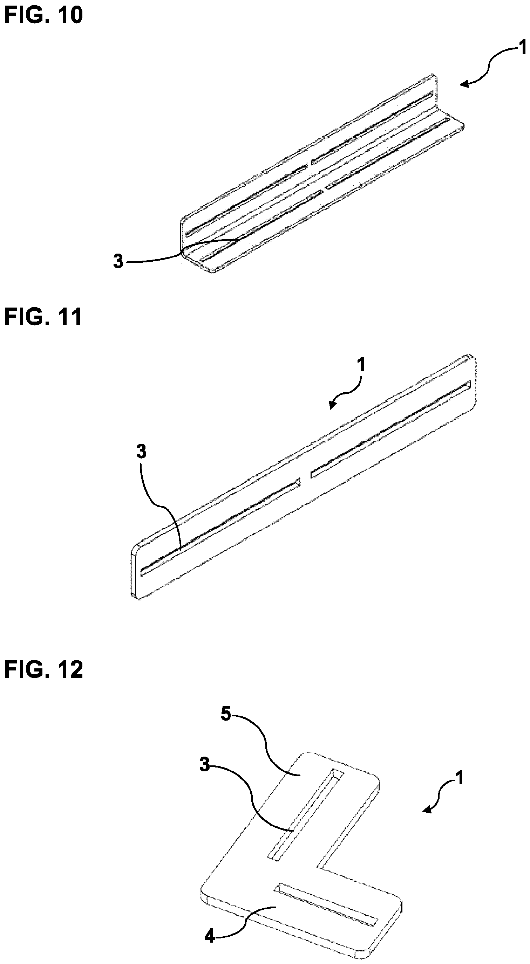

Eine weitere Ausgestaltung ist in den Figuren 9 und 10 gezeigt, bei der das Verbindungselement 1 ebenfalls zwei Arme 4, 5 aufweist, die jedoch über die Längsseite des Verbindungselementes 1 verbunden und zueinander in einem 90° Winkel angeordnet sind. Die dargestellten Arme 4, 5 weisen jeweils zwei Langlöcher 3 auf, deren Längsachsen quasi parallel verlaufen.

Es kann vorgesehen sein, dass die Verbindungselemente 1 neben mindestens einem Langloch 3 weitere Bohrungen 6 zur Aufnahme von Befestigungsmitteln aufweisen, was beispielhaft in den Figuren 4 und 7 angedeutet ist. Hierdurch sind weitere oder stabilere Verbindungen möglich. Denn durch die Bohrung 6 kann ebenfalls ein Befestigungsmittel durchgeführt werden, so dass zwei Verbindungselemente 1 verbindbar sind.

Figur 11 zeigt ein langgestrecktes, ebenes Verbindungselement 1 mit zwei hintereinander angeordneten Langlöchern 3. Ein gewinkeltes Verbindungselement 1 ist in Figur 12 dargestellt, bei dem das Verbindungselement 1 im Wesentlichen aus zwei Armen 4, 5 besteht, die in einem 90° Winkel zueinander angeordnet sind, wobei in jedem Arm 4, 5 jeweils ein Langloch 3 vorliegt. Das heißt, die Langlöcher 3 liegen in einer Ebene und die Längsachsen der Langlöcher stehen senkrecht zueinander.

Die Figuren 13-32 zeigen weitere perspektivische Ansichten weiterer Verbindungselemente bzw. Bauteile. Die Bauteile können unterschiedlich ausgestaltet sein und mehrere Metallteile/Arme mit Langlöchern oder Durchbrüchen aufweisen. Die Bezugszeichen sind hier analog anzuwenden.

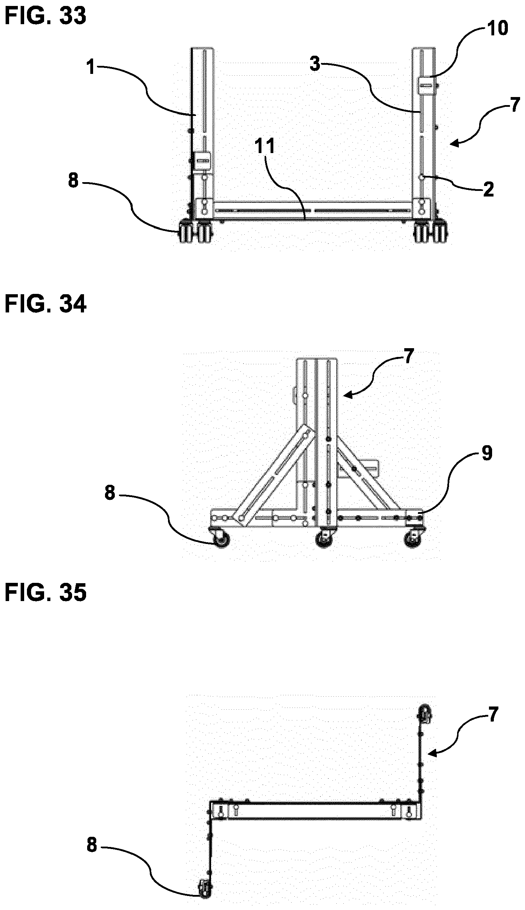

Die Figuren 33-38 zeigen eine Ausgestaltung der erfindungsgemäßen Vorrichtung aus verschiedenen Perspektiven. Die Vorrichtung umfasst mehrere Verbindungselemente 1, die jeweils mindestens ein Langloch 3 aufweisen und über Befestigungsmittel 2 miteinander befestigt sind, sodass eine Rahmenkonstruktion 7 gebildet wird. Die Rahmenkonstruktion 7 kann beispielsweise in Gestalt einer Tür bzw. deren Rahmen ausgebildet sein und so zwei Pfosten und einen oder mehrere die Pfosten miteinander verbindende Querträger umfassen.

An der Unterseite der Rahmenkonstruktion 7 sind Rollen 8 angeordnet. Die Rollen können beispielsweise über Steck- oder Schraubverbindungen an der Rahmenkonstruktion 7 befestigt sein. Hierbei handelt es sich vorzugsweise um Rollen 8, die um ihre Längsachse drehbar gelagert sind, sodass die Rollen um 360° drehbar sind.

Um die Stabilität der Rahmenkonstruktion 7 zu verbessern, können Halteelemente 9 vorgesehen sein. Die Halteelemente 9 bestehen ebenfalls aus Verbindungselementen 1 und erstrecken sich senkrecht von der Rahmenkonstruktion 7. Zwischen den Halteelementen 9 und der Rahmenkonstruktion 7 können als Querbestrebungen ausgebildete Verbindungselemente 1 vorliegen, die die Verbindung zwischen Haltelemente 9 und Rahmenkonstruktion 7 verstärken und insgesamt die Stabilität der Vorrichtung verbessern. Die Halteelemente 9 sind in der dargestellten Ausgestaltung an gegenüberliegenden Seiten der Rahmenkonstruktion 7 versetzt zueinander angeordnet. An den Halteelementen 9 können ebenfalls Rollen 8 an deren Unterseite vorgesehen sein.

Die Verbindungselemente 1 können an einem Pfosten der Rahmenkonstruktion 7 angebracht sein und als Abstandsmittel oder Sicherungsmittel 10 fungieren. Im unteren Bereich der Rahmenkonstruktion 7 ist eine Auflage 11 vorgesehen die in der dargestellten Ausgestaltung durch ein oder mehrere Verbindungselemente 1 gebildet wird. Auf die Auflage 11 kann ein plattenförmiges Objekt, wie beispielsweise eine Tür aufgelegt oder aufgestellt werden, die sich dann an der Rahmenkonstruktion 7 bzw. deren Pfosten und/oder Querträger anlehnt. Durch Sicherungsmittel 10 wird ein Kippen der zu transportierenden Tür während der Bewegung der Vorrichtung verhindert.

Die Rahmenkonstruktion 7 kann vorteilhafterweise eine Vorder- und Rückseite 12, 13 aufweisen, sodass eine Vorrichtung in einer bevorzugten Ausgestaltung mindestens zwei Objekte transportieren kann, die sich jeweils an eine Seite der Rahmenkonstruktion 7 lehnen. In einer nicht dargestellten Ausgestaltung kann vorgesehen sein, dass die Rahmenkonstruktion 7 derart gestaltet ist, dass sie vier Seiten aufweist und somit vier Objekte transportieren kann. Dies kann beispielsweise dadurch erreicht werden, dass vier Halteelemente 9 gegenüberliegend an der Rahmenkonstruktion 7 angeordnet sind und ebenfalls eine Auflage 11 für ein Objekt aufweisen, so dass jeweils ein Objekt an der Vorder- und Rückseite 12, 13 und jeweils ein Objekt an den Seiten der Rahmenkonstruktion 7 anlehnbar ist. Des Weiteren ist möglich, die Rahmenkonstruktion 7 derart zu gestalten, dass das plattenförmige Objekt bzw. mehrere plattenförmige Objekte liegend transportiert werden, sodass auch bei dieser Ausgestaltung mehrere Objekte transportierbar sind. Selbstverständlich kann die beispielhaft gezeigte Rahmenkonstruktion 7 in Abhängigkeit des zu tragenden Objektes verändert werden. Ist zum Beispiel ein weiterer Querträger vorn Vorteil, der sich zwischen den Pfosten erstreckt, kann dieser durch die Verbindung mehrerer Verbindungselemente 1 bereitgestellt und mittels Befestigungsmittel 2 mit den Pfosten verbunden werden. Dies wäre zum Beispiel bei einem Transport von Objekten von Vorteil, die kürzer als der Abstand zwischen den Pfosten ist. Ferner ist es möglich, die Länge der Rahmenkonstruktion 7 variabel zu gestalten. Das heißt, je nach Objekt kann die Rahmenkonstruktion 7 länger oder kürzer gestaltet werden, indem Verbindungselemente 1 zum die Pfosten verbindenden Querträger hinzugefügt oder entfernt werden. Gleiches gilt für die Höhe der Pfosten, die durch die Entnahme oder das Hinzufügen von Verbindungselementen variiert werden kann.

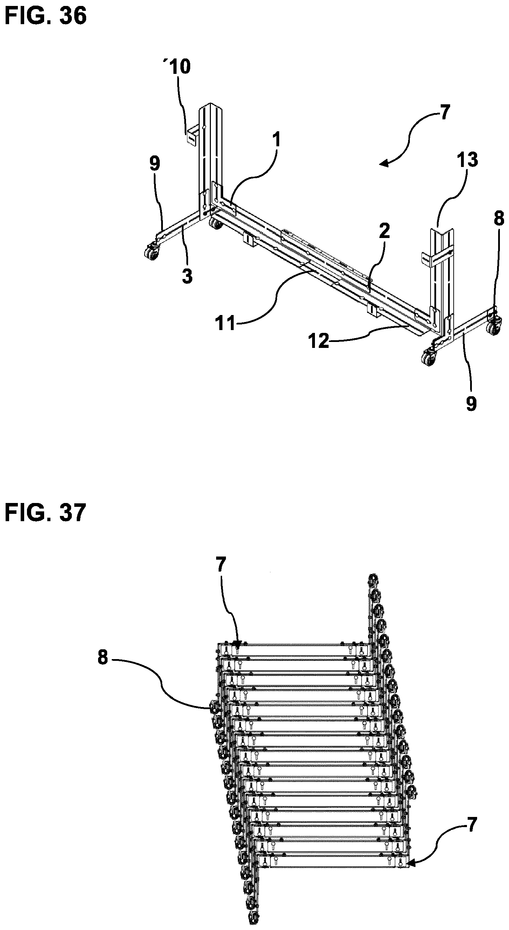

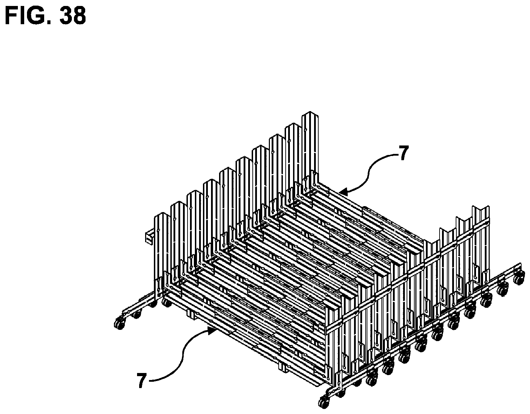

Ein wesentlicher Vorteil der erfindungsgemäßen Vorrichtung ist, dass sich die Objekte tragenden Vorrichtungen stapeln lassen, indem die Vorrichtungen hintereinander angeordnet werden, was beispielhaft in Figuren 37, 38 gezeigt ist. Dies ist insbesondere dann vorteilhaft, wenn mehrere Vorrichtungen in einem Laderaum eines Fahrzeuges transportiert oder in einem Raum zwischengelagert werden. Hierdurch wird wenig Stauraum benötigt. Die Vorrichtungen können im beladenen oder unbeladenen Zustand platzsparend hintereinander gestapelt werden.

## Patentansprüche

1. Vorrichtung zum Tragen mindestens eines plattenförmigen Objektes mit mehreren Verbindungselementen (1), wobei die Verbindungselemente (1) mindestens ein Langloch (3) zur Durchführung mindestens eines Befestigungsmittels (2) aufweisen und die Verbindungselemente (1) derart zueinander anordbar sind, dass ein Befestigungsmittel (2) durch mindestens zwei Langlöcher (3) zweier Verbindungselemente (1) ragt, so dass eine Rahmenkonstruktion (7) gebildet ist, an die wenigstens das Objekt anlehnbar ist, wobei an einer Unterseite der Rahmenkonstruktion (7) Rollen (8) zum Bewegen der Vorrichtung angebracht sind, wobei die Verbindungselemente (1) eine rechteckige Form aufweisen, **dadurch gekennzeichnet, dass** die Verbindungselemente (1) mindestens zwei hintereinander im Wesentlichen mittig vorliegenden separaten Langlöchern (3) aufweisen.

2. Vorrichtung nach einem der vorhergehenden Ansprüche, **dadurch gekennzeichnet, dass** die Verbindungselemente (1) eben sind.

3. Vorrichtung nach einem der vorhergehenden Ansprüche, **dadurch gekennzeichnet, dass** die Rollen (8) feststellbar sind.

4. Vorrichtung nach einem der vorhergehenden Ansprüche, **dadurch gekennzeichnet, dass** die Rahmenkonstruktion (7) von ihr im Wesentlichen senkrecht abstehende Halteelemente (9) aufweist, an denen Rollen (8) angeordnet sind.

5. Vorrichtung nach einem der vorhergehenden Ansprüche, **dadurch gekennzeichnet, dass** die Rahmenkonstruktion (7) in ihrem unteren Bereich durch die Verbindungselemente (1) gebildete Auflagen (11) aufweist, auf die das Objekt auflegbar ist.

6. Vorrichtung nach einem der vorhergehenden Ansprüche, **dadurch gekennzeichnet, dass** die Rahmenkonstruktion (7) eine Vorder- und eine Rückseite (12, 13) aufweist und jeweils ein Objekt an die Vorder- und Rückseite (12, 13) anlehnbar ist.

7. Vorrichtung nach einem der vorhergehenden Ansprüche, **dadurch gekennzeichnet, dass** die Rahmenkonstruktion (7) Abstandsmittel (10) aufweist, mit denen der Abstand zwischen Rahmenkonstruktion (7) und Objekt einstellbar ist.

8. Vorrichtung nach einem der vorhergehenden Ansprüche, **dadurch gekennzeichnet, dass** die Rahmenkonstruktion (7) verstellbare Sicherungsmittel (10) aufweist, die aus einer Beladestellung in eine Sicherungsstellung bringbar sind, in der eine Bewegung eines aufgenommenen Objektes mindestens eingeschränkt ist.

9. Vorrichtung nach einem der vorhergehenden Ansprüche, **dadurch gekennzeichnet, dass** die Rahmenkonstruktion (7) Schutzelemente aufweist, die aus einem elastischen Material bestehen und an der Rahmenkonstruktion (7) vorliegen, um eine Beschädigung eines aufgenommenen Objektes und/oder der Rahmenkonstruktion (7) zu verhindern.

10. Bausatz umfassend Verbindungselemente (1), Befestigungselemente (2) und Rollen (8) zum Aufbau einer Vorrichtung nach einem oder mehreren der vorhergehenden Ansprüche.

## Claims

1. Device for carrying at least one plate-shaped object with multiple connecting elements (1), wherein the connecting elements (1) have at least one elongated slot (3) for the insertion of at least one fastening means (2), and the connecting elements (1) are arrangeable relative to each other such that a fastening means (2) extends through at least two elongated slots (3) of two connecting elements (1), thereby forming a frame structure (7) against which at least the object can be leaned, wherein rollers (8) for moving the device are attached to a lower side of the frame structure (7), wherein the connecting elements (1) have a rectangular shape, **characterized in that** the connecting elements (1) have at least two successive, substantially centrally located separate elongated slots (3).

2. Device according to one of the preceding claims, **characterized in that** the connecting elements (1) are designed to be flat.

3. Device according to one of the preceding claims, **characterized in that** the rollers (8) are lockable.

4. Device according to one of the preceding claims, **characterized in that** the frame structure (7) has holding elements (9) protruding substantially perpendicularly from it, on which rollers (8) are arranged.

5. Device according to one of the preceding claims, **characterized in that** the frame structure (7) has supports (11) in its lower area formed by the connecting elements (1), on which the object can be placed.

6. Device according to one of the preceding claims, **characterized in that** the frame structure (7) has a front and a back side (12, 13), and an object can be leaned against both the front and back side (12, 13).

7. Device according to one of the preceding claims, **characterized in that** the frame structure (7) has spacing means (10) with which the distance between the frame structure (7) and the object is adjustable.

8. Device according to one of the preceding claims, **characterized in that** the frame structure (7) has adjustable securing means (10) that can be moved from a loading position to a securing position in which a movement of a received object is at least restricted.

9. Device according to one of the preceding claims, **characterized in that** the frame structure (7) has protective elements made of an elastic material and present on the frame structure (7) to prevent damage to a received object and/or the frame structure (7).

10. Kit comprising connecting elements (1), fastening elements (2), and rollers (8) for assembling a device according to one or more of the preceding claims.

## Revendications

1. Dispositif pour porter au moins un objet de forme plate comprenant plusieurs éléments de liaison (1), lesdits éléments de liaison (1) présentant au moins une fente allongée (3) pour l'insertion d'au moins un moyen de fixation (2), et les éléments de liaison (1) étant agençables les uns par rapport aux autres de sorte qu'un moyen de fixation (2) traverse au moins deux fentes allongées (3) de deux éléments de liaison (1), formant ainsi une structure de cadre (7) contre laquelle au moins l'objet peut être appuyé, des rouleaux (8) étant fixés à une face inférieure de la structure de cadre (7) pour déplacer le dispositif, les éléments de liaison (1) ayant une forme rectangulaire, **caractérisés en ce que** les éléments de liaison (1) présentent au moins deux fentes allongées séparées (3) disposées successivement et essentiellement de manière centrale.

2. Dispositif selon l'une des revendications précédentes, **caractérisé en ce que** les éléments de liaison (1) sont configurés de manière plane.

3. Dispositif selon l'une des revendications précédentes, **caractérisé en ce que** les rouleaux (8) sont bloquables.

4. Dispositif selon l'une des revendications précédentes, **caractérisé en ce que** la structure de cadre (7) comprend des éléments de maintien (9) s'étendant essentiellement perpendiculairement à elle, sur lesquels les rouleaux (8) sont disposés.

5. Dispositif selon l'une des revendications précédentes, **caractérisé en ce que** la structure de cadre (7) comprend, dans sa partie inférieure, des supports (11) formés par les éléments de liaison (1), sur lesquels l'objet peut être placé.

6. Dispositif selon l'une des revendications précédentes, **caractérisé en ce que** la structure de cadre (7) a un côté avant et un côté arrière (12, 13) et qu'un objet peut être appuyé contre le côté avant et le côté arrière (12, 13).

7. Dispositif selon l'une des revendications précédentes, **caractérisé en ce que** la structure de cadre (7) comprend des moyens de réglage de distance (10), avec lesquels la distance entre la structure de cadre (7) et l'objet est réglable.

8. Dispositif selon l'une des revendications précédentes, **caractérisé en ce que** la structure de cadre (7) comprend des moyens de sécurisation ajustables (10) qui peuvent être déplacés d'une position de chargement à une position de sécurisation, dans laquelle un mouvement d'un objet reçu est au moins limité.

9. Dispositif selon l'une des revendications précédentes, **caractérisé en ce que** la structure de cadre (7) comprend des éléments de protection fabriqués à partir d'un matériau élastique et situés sur la structure de cadre (7) pour prévenir tout dommage à un objet reçu et/ou à la structure de cadre (7).

10. Kit comprenant des éléments de liaison (1), des éléments de fixation (2) et des rouleaux (8) pour assembler un dispositif selon l'une ou plusieurs des revendications précédentes.
